Europäisches Patentamt

European Patent Office

Office européen des brevets

(19)

(11) **EP 1 296 476 A2**

(12) **EUROPEAN PATENT APPLICATION**

(43) Date of publication:
26.03.2003 Bulletin 2003/13

(51) Int Cl.⁷: **H04L 7/02**, G06F 1/10

(21) Application number: 02020902.9

(22) Date of filing: 18.09.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **21.09.2001 JP 2001289321**

(71) Applicant: **KONICA CORPORATION**
**Tokyo (JP)**

(72) Inventor: **Takaki, Kouichi**
**Hachioji-shi, Tokyo, 192-8505 (JP)**

(74) Representative: **Henkel, Feiler, Hänzel**
**Möhlstrasse 37**
**81675 München (DE)**

(54) **Synchronization in a signal processing apparatus**

(57)     There is described a signal-controlling apparatus, having signal-processing circuits in each of which a synchronizing operation is improved. The signal-controlling apparatus includes a plurality of signal-processing circuits, each of which includes a clock-generating section to generate a clock pulse signal; a data communication line through which digital data are bilaterally communicated between the plurality of signal-processing circuits; and a reference pulse communication line through which a reference pulse is transmitted from a master signal-processing circuit, being anyone of the plurality of signal-processing circuits, to a slave signal-processing circuit, being another one of the plurality of signal-processing circuits. In the slave signal-processing circuit, the clock-generating section generates the clock pulse signal so as to adjust a phase of the clock pulse signal to that of the digital data, based on a phase of the reference pulse. The reference pulse periodically transmitted at a predetermined time interval.

FIG. 1

## Description

## BACKGROUND OF THE INVENTION

The present invention relates to a signal-controlling apparatus and relates to an improvement of synchronizing operations in each of the signal-processing circuits.

There has been introduced in the market a signal-controlling apparatus, such as an image-processing apparatus, an image-forming apparatus, etc., having a plurality of signal-processing circuits, each of which is provided with a clock-generating section. In such the signal-controlling apparatus, to insure a proper image-processing operation and data transactions, the plurality of signal-processing circuits should be driven by clock signals having the same frequency and phase.

Incidentally, in regard to an arrangement of the plurality of signal-processing circuits, there would be various cases, such as a case in which the signal-processing circuits are distributed among plural apparatus being different each other, a case in which the signal-processing circuits are arranged within the same apparatus, a case in which the signal-processing circuits are arranged within the same circuit board of the same apparatus, etc.

Concretely speaking, a plurality of signal-processing circuits, which are driven by the clock signals having the same frequency and phase so as to perform an image-processing in the copier, each of a plurality of copiers and their internal signal-processing circuits when the copiers connected each other are operated in tandem (a tandem operating mode), etc., can be categorized in the abovementioned examples.

In order to drive the signal-processing circuits mentioned above with the clock signals having the same frequency and phase, the signal-processing circuits should be coupled each other with data communicating lines for communicating the data and clock pulse lines for supplying the clock signals. In other words, the clock pulses should be transmitted each other in parallel with the data communication between them.

In the above configuration, since each of the clock pulse lines is coupled each other between each pair of the plurality of signal-processing circuits, there has been a problem that electro-magnetic radiation noises, having the clock-frequency and higher-harmonic frequencies, are radiated from the clock pulse lines. Recently, the clock-frequency has been increasingly higher than ever, and accordingly, such the problem of influences, caused by the electro-magnetic radiation noises, becomes serious and cannot be ignored.

Despite that each of the clock pulse lines is coupled each other between each pair of the plurality of signal-processing circuits so as to drive them with the clock signals having the same frequency and phase, there has occurred a problem that it is impossible to drive them with the clock signals having the same frequency and phase, due to occurrences of skews.

Incidentally, a term of "skew" is defined as an arriving-time difference occurring when the clock signals are transmitted through plural paths of signal lines. The skew causes such the problems that a plurality of signal-processing circuits cannot be driven just in the same timing of the clock signals, and the reliability of the data-communications between them would be lowered. The more higher the frequency of the clock signals for driving the circuit is raised, the more serious the abovementioned problems become. Further, the occurred delay times are different each other between the data and the clock pulses, and such the differences between the occurred delay times result in deterioration of the reliability of their operations.

Incidentally, in regard to the abovementioned technology and the problem of the skew caused by the long length of clock pulse lines, the solution, in which the clock pulse lines are shortened by mounting the circuits for driving and receiving the clock pulse and the data at the end portion the circuit board, is set forth in Tokkaihei 9-167038. It is impossible, however, to completely eliminate the skews in the abovementioned solution though it is possible to minimize the skews, since the disclosed solution is not such the configuration that each of the circuit boards has a clock-generating section and clock-generating sections are synchronized each other. Further, even if the length of the line is shortened, it is impossible to completely solve the problem of the electro-magnetic radiation when transmitting the high frequency clock pulses.

Further, in regard to the abovementioned technology and the problem of the skew caused by the long length of clock pulse lines, as well as the above, the solution, in which the clock pulse lines are shortened by coupling the circuit boards each other within a shortest distance by applying the flip-chip technology, is set forth in Tokkaihei 9-107065. It is impossible, however, to completely eliminate the skews in the abovementioned solution though it is possible to minimize the skews, since the disclosed solution is not such the configuration that each of the circuit boards has a clock-generating section and clock-generating sections are synchronized each other. In addition, there has been another problem that the abovementioned solution cannot be applied to circuit boards located at separate positions being remote each other and to separate apparatus.

## SUMMARY OF THE INVENTION

To overcome the abovementioned drawbacks in conventional signal-controlling apparatus, it is an object of the present invention to provide signal-controlling apparatus, with which a plurality of signal-processing circuits, each of which includes a clock-generating section to generate a clock pulse signal, are equipped, and in which the synchronizing operation for the clock-generating section of each signal-processing circuit can be conducted without causing the problems of the electromagnetic radiation and the skew.

Accordingly, to overcome the cited shortcomings, the abovementioned object of the present invention can be attained by signal-controlling apparatus and image-forming systems described as follow.

(1) A signal-controlling apparatus, comprising: a plurality of signal-processing circuits, each of which includes a clock-generating section to generate a clock pulse signal; a data communication line through which digital data are bilaterally communicated between the plurality of signal-processing circuits; and a reference pulse communication line through which a reference pulse is transmitted from a master signal-processing circuit, being anyone of the plurality of signal-processing circuits, to a slave signal-processing circuit, being another one of the plurality of signal-processing circuits; wherein, in the slave signal-processing circuit, the clock-generating section generates the clock pulse signal so as to adjust a phase of the clock pulse signal to that of the digital data, based on a phase of the reference pulse; and wherein the reference pulse periodically transmitted at a predetermined time interval.

(2) The signal-controlling apparatus of item 1, wherein the predetermined time interval is integral multiples of one period of the clock pulse signal to be generated by the clock-generating section.

(3) The signal-controlling apparatus of item 1, wherein the clock-generating section comprises: a digital-delay clock adjusting section to adjust timings of rising-edges or falling-edges of the clock pulse signal generated by changing a selection for a plurality of delayed-clock pulses, which are generated by delaying clock-pulses, outputted from a reference oscillator, in slightly different delay times; and a controlling section to control a selecting operation for the plurality of delayed clock pulses, performed in the digital-delay clock adjusting section, so as to adjust a phase of the clock pulse signal to that of the digital data, based on a phase of the reference pulse.

(4) The signal-controlling apparatus of item 1, wherein the reference pulse consists of a plurality of unit pulses occurring at short time intervals.

(5) The signal-controlling apparatus of item 3, wherein each of the plurality of signal-processing circuits is composed of digital circuits.

(6) A signal-controlling apparatus, comprising: a plurality of signal-processing circuits, each of which includes a clock-generating section to generate a clock pulse signal; a data communication line through which digital data are bilaterally communicated between the plurality of signal-processing circuits; and a reference pulse communication line through which a reference pulse is transmitted from a master signal-processing circuit, being anyone of the plurality of signal-processing circuits, to a slave signal-processing circuit, being another one of the plurality of signal-processing circuits; wherein, in the slave signal-processing circuit, the clock-generating section generates the clock pulse signal so as to cancel a skew between the digital data and the clock pulse signal, corresponding to skew data stored in advance and based on a phase of the reference pulse; and wherein the reference pulse periodically transmitted at a predetermined time interval.

(7) The signal-controlling apparatus of item 6, wherein the predetermined time interval is integral multiples of one period of the clock pulse signal to be generated by the clock-generating section.

(8) The signal-controlling apparatus of item 6, wherein the clock-generating section comprises: a digital-delay clock adjusting section to adjust timings of rising-edges or falling-edges of the clock pulse signal generated by changing a selection for a plurality of delayed-clock pulses, which are generated by delaying clock-pulses, outputted from a reference oscillator, in slightly different delay times; and a controlling section to control a selecting operation for the plurality of delayed clock pulses, performed in the digital-delay clock adjusting section, so as to cancel a skew between the digital data and the clock pulse signal, corresponding to skew data stored in advance and based on a phase of the reference pulse.

(9) The signal-controlling apparatus of item 6, wherein the reference pulse consists of a plurality of unit pulses occurring at short time intervals.

(10) The signal-controlling apparatus of item 8, wherein each of the plurality of signal-processing circuits is composed of digital circuits.

(11) An image-forming system, comprising: a plurality of image-forming apparatus, coupled each other so as to operate them in tandem or a tandem operating mode, and each of which has a signal-processing circuit including a clock-generating section to generate a clock pulse signal; a data communication line through which digital data are bilaterally communicated between the plurality of image-forming apparatus; and a reference pulse communication line through which a reference pulse is transmitted from a master signal-processing circuit of a master image-forming apparatus, being anyone of the plurality of image-forming apparatus, to a slave signal-processing circuit of a slave image-forming apparatus, being another one of the plurality of image-forming apparatus; wherein, in the slave signal-processing circuit, the clock-generating section generates the clock pulse signal so as to adjust a phase of the clock pulse signal to that of the digital data, based on a phase of the reference pulse; and wherein the reference pulse periodically transmitted at a predetermined time interval.

(12) The image-forming system of item 11, wherein the predetermined time interval is integral multiples of one period of the clock pulse signal to be generated by the clock-generating section.

(13) The image-forming system of item 11, wherein the clock-generating section comprises: a digital-delay clock adjusting section to adjust timings of rising-edges or falling-edges of the clock pulse signal generated by changing a selection for a plurality of delayed-clock pulses, which are generated by delaying clock-pulses, outputted from a reference oscillator, in slightly different delay times; and a controlling section to control a selecting operation for the plurality of delayed clock pulses, performed in the digital-delay clock adjusting section, so as to cancel a skew between the digital data and the clock pulse signal, corresponding to skew data stored in advance and based on a phase of the reference pulse.

(14) The image-forming system of item 11, wherein the reference pulse consists of a plurality of unit pulses occurring at short time intervals.

(15) The image-forming system of item 13, wherein each of the plurality of signal-processing circuits is composed of digital circuits.

Further, to overcome the abovementioned problems, other signal-controlling apparatus, embodied in the present invention, will be described as follow:

(16) A signal-controlling apparatus, characterized in that,

in the signal-controlling apparatus having a plurality of signal-processing circuits, each of which is equipped with a clock-generating section,

the plurality of signal-processing circuits are coupled each other with data communication lines for conducting data communication and reference pulse communication lines for transferring a predetermined number of reference pulses, and residual signal-processing circuits, which receives the reference pulse sent from anyone of the plurality of signal-processing circuits, conduct a synchronizing operation of the clock-generating section by means of the reference pulse.

In the signal-controlling apparatus of the present invention, when the signal-controlling apparatus has a plurality of signal-processing circuits, each of which is equipped with a clock-generating section, the plurality of signal-processing circuits are coupled each other with data communication lines and reference pulse communication lines, and residual signal-processing circuits conduct a synchronizing operation of the clock-generating section by receiving the reference pulse sent from anyone of the plurality of signal-processing circuits.

In this configuration, since it is the predetermined number of reference pulses, instead of the continuous clock pulses, that sent to each of signal-processing circuits through the reference pulse communication lines, the problem of electro-magnetic radiation can be eliminated.

Accordingly, in the signal-controlling apparatus having a plurality of signal-processing circuits, each of which is equipped with a clock-generating section, it becomes possible to conduct the synchronizing operation of the clock-generating section in each of signal-processing circuits without causing the problem of electro-magnetic radiation.

(17) A signal-controlling apparatus, characterized in that,

in the signal-controlling apparatus having a plurality of signal-processing circuits, each of which is equipped with a clock-generating section,

the plurality of signal-processing circuits are coupled each other with data communication lines for conducting data communication and reference pulse communication lines for transferring a predetermined number of reference pulses, and residual signal-processing circuits, which receives the reference pulse sent from anyone of the plurality of signal-processing circuits, conduct a synchronizing operation of the clock-generating section by means of the reference pulse, corresponding to skew data given in advance, so as to cancel a delay caused by the skew.

In the signal-controlling apparatus of the present invention, when the signal-controlling apparatus has a plurality of signal-processing circuits, each of which is equipped with a clock-generating section, the plurality of signal-processing circuits are coupled each other with data communication lines and reference pulse communication lines, and residual signal-processing circuits conduct a synchronizing operation of the clock-generating section by receiving the reference pulse sent from anyone of the plurality of signal-processing circuits, so as to cancel the skew.

In this configuration, since it is the predetermined number of reference pulses, instead of the continuous clock pulses, that sent to each of signal-processing circuits through the reference pulse communication lines, the problem of electro-magnetic radiation can be eliminated. In addition, since the synchronizing operation is conducted so as to cancel a delay caused by the skew, the problem caused by the skew can be eliminated.

Accordingly, in the signal-controlling apparatus having a plurality of signal-processing circuits, each of which is equipped with a clock-generating section, it becomes possible to conduct the synchronizing operation of the clock-generating section in each of signal-processing circuits without causing the problem of electro-magnetic radiation and/or the problem caused by the skew.

(18) The signal-controlling apparatus, recited in item 16 or item 17, characterized in that

each of the plurality of signal-processing circuits is arranged in each of different apparatus.
(19) The signal-controlling apparatus, recited in item 16 or item 17, characterized in that

the plurality of signal-processing circuits are arranged in a same apparatus.
(20) The signal-controlling apparatus, recited in item 16 or item 17, characterized in that

the plurality of signal-processing circuits are arranged on a same circuit board in an apparatus.
(21) The signal-controlling apparatus, recited in anyone of items 16-20, characterized in that

the clock-generating section comprises

a digital-delay clock adjusting means to adjust timings of rising-edges or falling-edges of the clock pulse signal generated by changing a selection for a plurality of delayed-clock pulses, which are generated by delaying clock-pulses, outputted from a reference oscillator, in slightly different delay times; and

a controlling means to conduct an operation for synchronizing an output pulse with the reference pulse by controlling a selecting operation for the plurality of delayed clock pulses, performed in the digital-delay clock adjusting means.

In the signal-controlling apparatus mentioned above, when the signal-controlling apparatus has a plurality of signal-processing circuits, each of which is equipped with a clock-generating section, the plurality of signal-processing circuits are coupled each other with data communication lines and reference pulse communication lines, and residual signal-processing circuits conduct a synchronizing operation of the clock-generating section by receiving the reference pulse sent from anyone of the plurality of signal-processing circuits.

Further, when conducting the synchronizing operation, a plurality of delayed-clock pulses having different delay times are generated by delaying the reference oscillating signal outputted from a reference oscillator in the delay chain section, and the synchronizing operation is controlled so as to conduct the selecting operation for the plurality of delayed clock pulses by the reference pulse.

Accordingly, in the signal-controlling apparatus having a plurality of signal-processing circuits, each of which is equipped with a clock-generating section, it becomes possible to easily and accurately conduct the synchronizing operation of the clock-generating section in each of signal-processing circuits without causing the problem of electro-magnetic radiation and/or the problem caused by the skew.
(22) The signal-controlling apparatus, recited in item 21, characterized in that

the controlling means controls the selecting operation for the plurality of delayed clock pulses performed in the digital-delay clock adjusting means corresponding to a skew.

In the abovementioned signal-controlling apparatus of the present invention, since the selecting operation for the plurality of delayed clock pulses performed in the digital-delay clock adjusting means is controlled corresponding to the skew, it becomes possible to easily, accurately and digitally conduct the synchronizing operation of the clock-generating section in each of signal-processing circuits without causing the problem of electro-magnetic radiation and/or the problem caused by the skew.
(23) The signal-controlling apparatus, recited in anyone of items 16-20, characterized in that

each of the signal-processing circuits is composed of digital circuits.
(24) The signal-controlling apparatus, recited in anyone of items 21-22, characterized in that

the controlling means and each of the signal-processing circuits are composed of digital circuits.

## BRIEF DESCRIPTION OF THE DRAWINGS

Other objects and advantages of the present invention will become apparent upon reading the following detailed description and upon reference to the drawings in which:

Fig. 1 shows a schematic diagram of an electronic configuration of a signal-controlling apparatus main section, embodied in the present invention;
Fig. 2 shows a schematic diagram of a whole configuration of a system embodied in the present invention, in which a plurality of signal-controlling apparatus are coupled in tandem (a tandem operating mode);
Fig. 3 shows a circuit configuration of delay cells cascaded as a chain and employed in a signal-controlling apparatus embodied in the present invention;
Fig. 4 shows a time chart of delayed clock signals, which are generated in the circuit configuration shown in Fig. 3;
Fig. 5 shows another time chart of delayed clock signals, which are generated in the circuit configuration shown in Fig. 3;

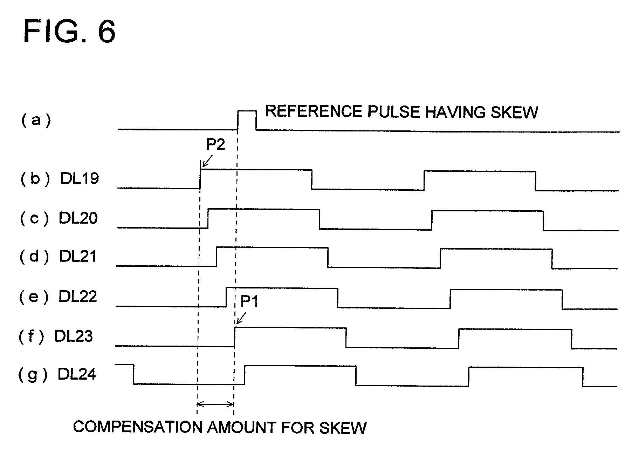

Fig. 6 shows another time chart, which indicates time differences between a reference pulse having a skew and delayed clock signals generated in the circuit configuration shown in Fig. 3;
Fig. 7 shows a time chart for explaining an operating status of the signal-controlling apparatus embodied in the present invention; and
Fig. 8 shows another time chart for explaining an operating status of the signal-controlling apparatus embodied in the present invention.

DETAILED DESCRIPTION OF THE PREFERRED EMBODIMENT

Referring to the drawings, an example of the signal-controlling apparatus embodied in the present invention will be detailed in the following. Initially, the whole configuration of the signal-controlling apparatus will be detailed.

[SUMMARIZED EXPLANATION FOR SIGNAL-CONTROLLING APPARATUS EMBODIED IN THE PRESENT INVENTION]

The signal-controlling apparatus is characterized in that,

in the signal-controlling apparatus having a plurality of signal-processing circuits, each of which is provided with a clock-generating section,

the signal-processing circuits are coupled each other through data communicating lines for communicating the data and reference pulse lines for transmitting predetermined reference-pulse signals, which are transmitted from anyone of the signal-processing circuits, serving as a master signal-processing circuit, and each of other signal-processing circuits, which receive the reference-pulse signals and serve as slave signal-processing circuits, performs a phase adjusting operation of clock signals generated in the clock-generating section, referring to the phase of the predetermined reference-pulse.

Further, the signal-controlling apparatus mentioned above is also characterized in that, data in respect to the variation of skews between the reference pulse and clock signals, generated in clock-generating sections of the signal-processing circuits, are stored in each of the signal-processing circuits, and the variation of skews is adjusted in each of the signal-processing circuits, based on the data in respect to the variation of skews stored in them, so that the phases of the clock signals coincide relative to each other between the slave signal-processing circuits.

Incidentally, the signal-processing circuits are distributed among plural apparatus being different each other, the signal-processing circuits are arranged within the same apparatus, or the signal-processing circuits are arranged within the same circuit board of the same apparatus.

Further, in order to unify the phases of the clock signals generated in the signal-processing circuits by adjusting the variation of skews in each of the signal-processing circuits as mentioned above, the clock-generating section in each of the signal-processing circuits is provided with a clock adjusting means for changing timings of rising-edges or falling-edges of clock pulses generated by changing a selection for a plurality of delayed-clock pulses, which are generated by delaying clock-pulses, outputted from a reference oscillator, in slightly different delay times, and selected delayed-clock pulses are employed as the clock signals for driving each of signal-processing circuits.

For this purpose, the variation range of the delay-times of the delayed-clock pulses should have a width being sufficient for adjusting the phases of the clock signals to a unified phase. Accordingly, although an analogue delay element of general purpose can be employed for generating the delayed signals, a digital delay clock adjusting means is employed in the embodiment, which will be detailed in the following.

Incidentally, by employing the digital delay clock adjusting means mentioned above, it becomes possible to reduce the manufacturing cost of the plurality of signal-processing circuits, and further, also possible to construct them as digital circuits. Still further, by constructing them as digital circuits, it also becomes possible to fabricate each of them on one-chip integrated circuit, possibly resulting in minimization of the wiring lengths, easiness of the controlling operations and an improvement of the operation accuracy.

[WHOLE CONFIGURATION OF SHEET PROCESSING APPARATUS]

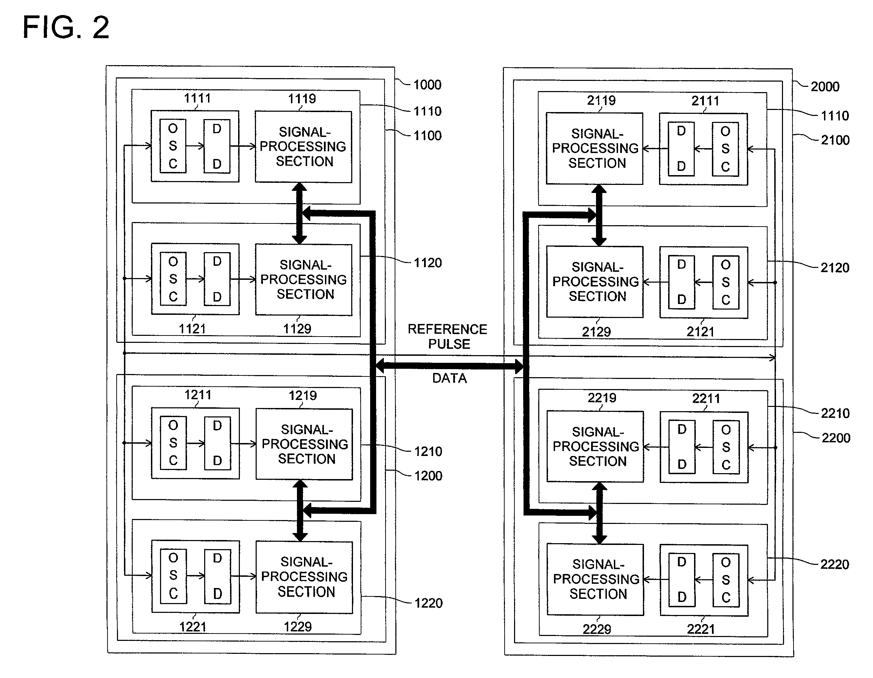

Referring to Fig. 2, a system configuration, in which a plurality of signal-controlling apparatus are coupled in tandem (a tandem operating mode), will be detailed in the following. In the system configuration, each of the plurality of signal-controlling apparatus comprises a plurality of signal-processing circuits driven by clock signals having the same frequency and phase in the apparatus.

In the above configuration, first signal-controlling apparatus 1000 and second signal-controlling apparatus 2000 are coupled each other through data communication lines for communicating the data between them and reference pulse lines for bilaterally transmitting the reference pulses, so as to operate the system with the clock signals having the same frequency and phase.

Further, in the above configuration, a plurality of signal-processing circuits (signal-processing circuit 1110 and signal-processing circuit 1120) are arranged on a single circuit board (circuit board 1100) equipped in a single apparatus (signal-controlling apparatus 1000). In the same manner, a plurality of signal-processing circuits (signal-processing circuit 1210 and signal-processing circuit 1220) are arranged on a single circuit board (circuit board 1200) equipped in the single apparatus (sheet processing apparatus 1000). Further, a plurality of signal-processing circuits (signal-processing circuit 2110 and signal-processing circuit 2120) are arranged on a single circuit board (circuit board 2100) equipped in a single apparatus (signal-controlling apparatus 2000). In the same manner, a plurality of signal-processing circuits (signal-processing circuit 2210 and signal-processing circuit 2220) are arranged on a single circuit board (circuit board 2200) equipped in the single apparatus (signal-controlling apparatus 2000).

Still further, a plurality of signal-processing circuits (signal-processing circuit 1110 and signal-processing circuit 1120, signal-processing circuit 1210 and signal-processing circuit 1220) are arranged on separate circuit boards (circuit board 1100 and circuit board 1200) equipped in the single apparatus (signal-controlling apparatus 1000). In the same manner, a plurality of signal-processing circuits (signal-processing circuit 2110 and signal-processing circuit 2120, signal-processing circuit 2210 and signal-processing circuit 2220) are arranged on separate circuit boards (circuit board 2100 and circuit board 2200) equipped in the single apparatus (signal-controlling apparatus 2000).

Incidentally, each of signal-processing circuits (1110, 1120, 1220, 2110, 2220) comprises each of clock-generating sections (1111, 1121, 1211, 1221, 2111, 2121, 2211, 2221), which includes oscillator OSC and digital delay clock adjusting means DD.

Incidentally, the clock-generating section employed in this embodiment generates delay signals, delay times of which vary in a range being sufficiently wide for adjusting the delay caused by the skew described later. Concretely speaking, in the embodiment of the present invention, a plurality of delayed signals are generated by delaying clock-pulses, outputted from oscillator OSC, in slightly different delay times, and then, a suitable delayed signal is selected out of the plurality of delayed signals so that the selected delayed signal is employed for driving each of signal-processing circuits. For this purpose, although the digital delay clock adjusting means described later is employed in the present embodiment, an analogue delay means (such as a delay line) can be also employed as another means other than the above.

Further, each of signal-processing circuits (1110, 1120, 1220, 2110, 2220) comprises each of signal-processing sections (1119, 1129, 1219, 1229, 2119, 2129, 2219, 2229), which performs signal processing operations.

[DETAILED CONFIGURATION OF
SIGNAL-CONTROLLING APPARATUS]

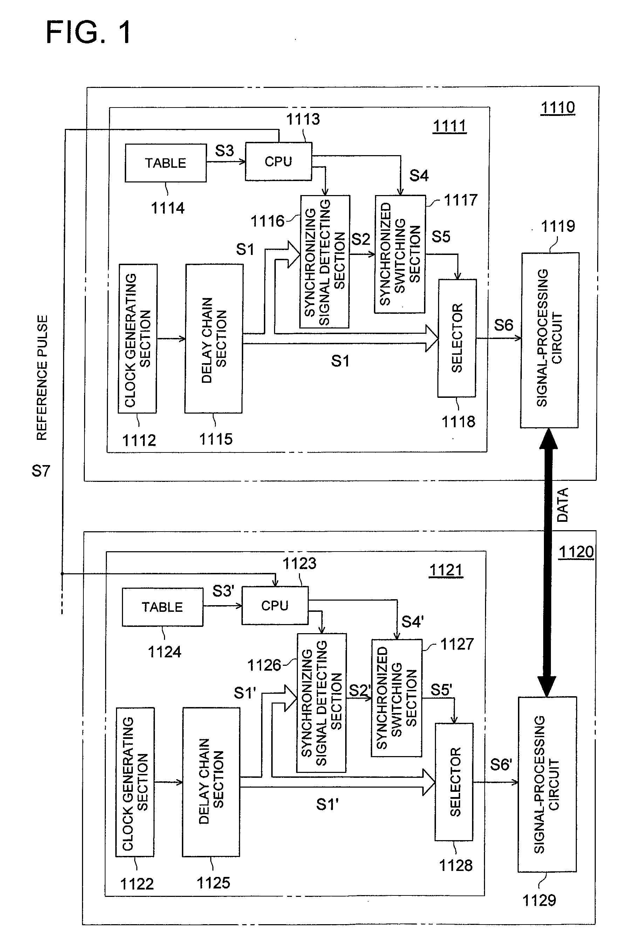

Referring to Fig. 1, a detailed configuration of the main section of the signal-controlling apparatus, comprising a plurality of signal-processing circuits driven by the clock signals having the same frequency and phase, will be detailed in the following by exemplifying a plurality of signal-processing circuits (signal-processing circuit 1110 and signal-processing circuit 1120) arranged on the single circuit board (circuit board 1100) of the single apparatus (signal-processing apparatus 1000) as a concrete example. Incidentally, the operations detailed in the following can be also applied in the same manner to a plurality of signal-processing circuits mounted on the other signal-processing circuit, a plurality of signal-processing circuits arranged on the different circuit boards, and the signal-processing circuits distributed among plural apparatus being different each other.

In signal-processing circuit 1110, clock-generating section 1111 and signal-processing circuit 1119, driven by the clock signals generated by clock-generating section 1111, are arranged. Further, clock-generating section 1111 comprises oscillator (OSC) 1112 oscillating at a predetermined frequency, CPU 1113 serving as a controlling means, table 1114 storing predetermined data, delay chain section 1115 for generating a plurality of delayed signals having different delay times by delaying oscillation signals, outputted from oscillator 1112, in slightly different delay times, synchronizing signal detecting section 1116 for detecting a synchronizing signal from a large number of delayed signals, synchronized switching section 1117 for performing a synchronized switching operation and selector 1118, serving as a selecting means, for selecting a certain delayed signal out of a large number of delayed signals. Incidentally, CPU 1113 outputs the reference signals, for synchronizing the clock signals of the other signal-processing circuits each other, to the CPUs of the other signal-processing circuits at a timing of execution described later through reference pulse transmitting lines.

Further, in signal-processing circuit 1120, clock-generating section 1121 and signal-processing circuit 1129, driven by the clock signals generated by clock-generating section 1121, are arranged. Further, clock-generating section 1121 comprises oscillator (OSC) 1122 oscillating at a predetermined frequency, CPU 1123 serving as a controlling means, table 1124 storing predetermined data, delay chain section 1125 for generating a plurality of delayed signals having different delay times by delaying oscillation signals, outputted from oscillator 1122, in slightly different delay times, synchronizing signal detecting section 1126 for detecting a synchronizing signal from a large number of delayed signals, synchronized switching section 1127 for performing a synchronized switching operation and selector 1128, serving as a selecting means, for selecting a certain delayed signal out of a large number of delayed signals. Incidentally, CPU 1123 receives the reference signals, for synchronizing the clock signals of the other signal-processing circuits each other, from CPU 1113 through the reference pulse transmitting lines.

[DETAILED EXPLANATION OF
SIGNAL-CONTROLLING APPARATUS]

The signal-controlling apparatus embodied in the present invention will be detailed in the following.

(A) GENERATION OF DELAYED SIGNALS

In delay chain sections 1115, 1125, it is desirable that the delay elements, such as inverters, are cascaded as a chain in such a number of stages that the delayed clock signals, phases of which are slightly different relative to each other, can be formed over at least one period, or more desirably two periods, of the reference oscillation signal.

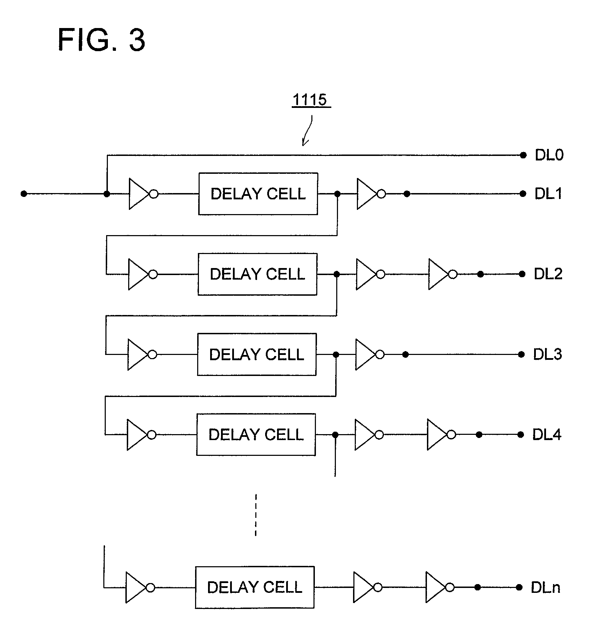

For instance, as shown in Fig. 3, delay cells, each of which serves as a delay element having a microscopic delay time sufficiently smaller than one period of the reference oscillation signal generated by the oscillator, are cascaded as a chain so that each of the delay cells outputs the delayed clock signal, phase of which is slightly different from those of former and latter delayed clock signals.

Fig. 3 shows a circuit diagram of delay chain section 1115, which receives the reference oscillation signal from oscillator 1112. In Fig. 3, DL0 indicates a delayed clock signal, which does not go through any delay cell, DL1 indicates a delayed clock signal, which goes through one stage of the delay cells, DL2 indicates a delayed clock signal, which goes through two stages of the delay cells and DLn indicates a delayed clock signal, which goes through "n" stages of the delay cells. Incidentally, each configuration of the other delay chain sections is the same as that of the above. Further, in regard to the delay chain section, it is desirable that a circuit configuration or layout in which distortion of duty cycles in delayed clock signals are minimized and output intervals between the stages are divided as finely and uniformly as possible, by duplicating elements, such as inverters having a microscopic delay time and inverting logic, next to the delay element.

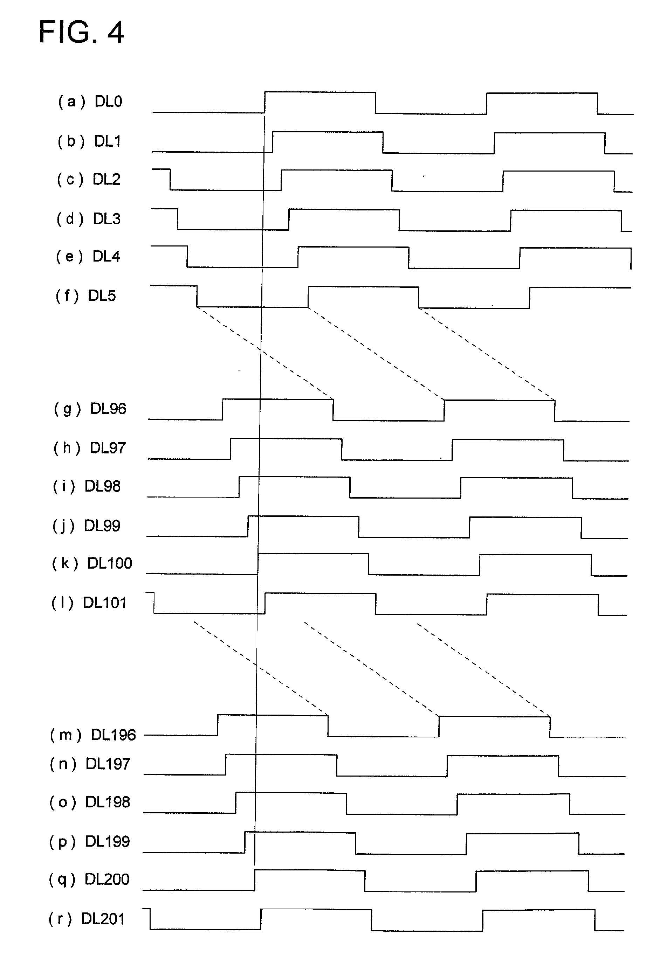

Fig. 4 shows a time chart of delayed clock signals, which are generated in the circuit configuration shown in Fig. 3. DL0 is indicated on line (a), which does not go through any delay cell and whose status is the same as that of the reference oscillation signal sent from oscillator 1112. In the following lines, the numeral attached next to the notation of "DL" indicates the number of delay stages, namely, the delayed clock signal, which goes through one stage of the delay cells, is denoted by DL1, the delayed clock signal, which goes through two stages of the delay cells, is denoted by DL2, the delayed clock signal, which goes through 100 stages of the delay cells, is denoted by DL100 and the delayed clock signal, which goes through 200 stages of the delay cells, is denoted by DL200. In Fig. 3, the phase of DL0 coincides with the phase of DL100 and DL200.

(B) SYNCHRONIZING SIGNAL DETECTING OPERATION:

The signal-controlling apparatus, embodied in the present invention, is characterized in that a plurality of signal-controlling circuits are synchronized each other, corresponding to the reference signals. For this purpose, it is desirable that the CPU in each of the plurality of signal-controlling circuits generates pulse signal (hereinafter referred to as a timing signal), having a logic status and width suitable for the synchronizing signal detecting operation performed in the synchronizing signal detecting section and corresponding to the reference signal (namely, the phase of which coincides with that of the reference signal), though the timing signal could be the reference signal itself. In the present specification, a concrete example, in which the synchronizing signal detecting operation is performed by employing the timing signal corresponding to the reference signal, will be detailed in the following.

Synchronizing signal-detecting sections 1116, 1126 serve as detecting means for selecting a specific delayed signal, synchronizing with the timing signal, out of a group of delayed signals (S1, S1' in Fig. 1), and for detecting a number of stages (synchronized point) of the selected delayed signal to output a synchronized point information (S2, S2' in Fig. 1). Incidentally, it is desirable that synchronizing signal-detecting sections 1116, 1126 can output both the first synchronized point information, synchronized with the timing signal at first, and the second synchronized point information, synchronized with the timing signal at second, detecting from the group of delayed signals (S1, S1' in Fig. 1).

Since there is a possibility that delay times of the plurality of delayed signals outputted from delay chain sections 1115, 1125 can be varied under the influences of the temperature change, etc., the number of delayed signals included within a predetermined and stable time-interval (an interval between a timing signal and its next timing signal) is detected in advance as aforementioned.

By conducting the aforementioned process, even if the delay time of the individual delay cell varies with the temperature change, the overall system of the apparatus cannot be suffered by any influence of them, resulting in an advantageous point of the present invention.

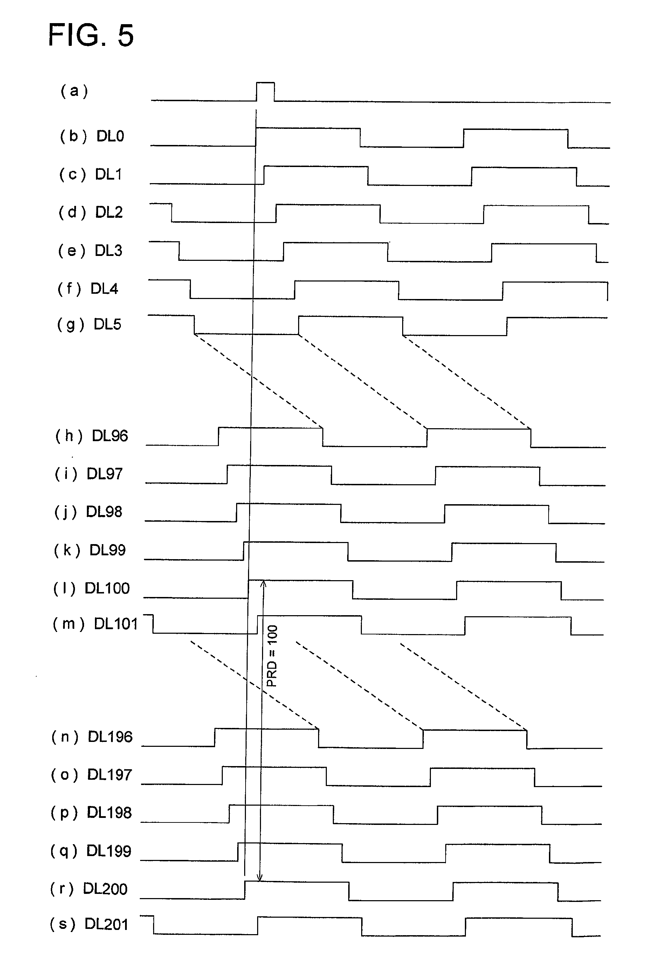

In the example shown in Fig. 5, the phases of DL100 and DL200 coincide with that of the timing signal (shown in line (a) of Fig. 5). Accordingly, it is determined as SP1 = 100, SP2 = 200. Further, the number of stages for one period is determined as PRD = 100.

(B) CALCULATION OF COMPENSATION AMOUNT:

Each of synchronized switching sections 1117, 1127 outputs a select signal (S5, S5' in Fig. 1) for designating a specific delayed signal to be selected out of the group of the delayed signals (S1, S1' in Fig. 1) by finding a synchronized compensation amount based on the synchronized point information (S2, S2' in Fig. 1) outputted from synchronizing signal-detecting sections 1116, 1126 and the skew information (S3, S3' in Fig. 1) read by CPU 1113, 1123 from table 1114, 1124.

In signal-processing circuit 1120, which receives the reference pulse signal from signal-processing circuit 1110 through the reference pulse transmission line, the received reference pulse signal itself has a skew. Accordingly, only by selecting a specific delayed signal, which is synchronized with the received reference pulse signal, the selected delayed signal is not necessary synchronized with the original reference pulse signal generated in signal-processing circuit 1110.

To cope with the above problem, data of time differences caused by the skew are stored in advance as skew information in table 1124. Then, CPU 1123 performs the synchronizing operation in the clock-generating section by the reference pulse signal, so as to cancel the delay time caused by the skew by referring the skew time included in the skew information.

Now, number of delay stages for compensation F_DELAY can be found by the following equation.

$$F\_DELAY = A \div T \times PRD$$

Where, A: a skew time, T: a time of one period of the delay signal, PRD: a number of synchronized stages.

Incidentally, since the number of delay stages for compensation should be subtracted from the number of delay signals synchronized with the reference pulse signal (P1 → P2), final number of select stages F_SYNC after performing the skew compensation is defined by the following equation. When

$$SP1 - F\_DELAY \geq 0,$$

$$F\_SYNC = SP1 - F\_DELAY ,$$

while, when

$$SP1 - F\_DELAY < 0,$$

$$F\_SYNC = SP2 - F DELAY .$$

(D) PULSE SELECTION, CLOCK OUTPUT:

Each of selectors 1118, 1128 receives a number of select stages F_DELAY included in the select signal (S5, S5' in Fig. 1) sent from each of synchronized switching sections 1117, 1127 and selects a specific delay signal having a corresponding phase out of the group of the delayed signals (S1, S1' in Fig. 1) to output it as a clock signal (S6, S6' in Fig. 1).

(E) SYNCHRONIZING OPERATION BY REFERENCE PULSE SIGNAL

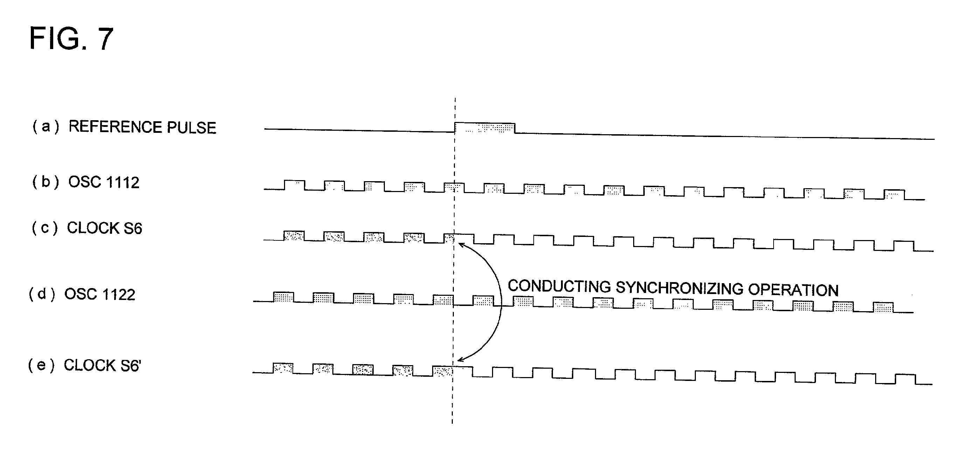

As aforementioned, signal-processing circuits 1110, 1120 are so constituted that the period of the clock signal can be slightly increased or decreased. Further, CPU 1113 equipped in the signal-processing circuit 1110 transmits the reference pulse signals to CPU 1122 equipped in the signal-processing circuit 1120 through the reference pulse transmitting line. Still further, both CPU 1113 and CPU 1123 perform the selecting operation of the delayed signal synchronized with the reference pulse signal in each of selectors 1118, 1128 by giving the timing signal, corresponding to the reference pulse signal (shown in line (a) of Fig. 7), to the synchronizing signal-detecting section, so as to conduct the synchronizing operation between the clock signals, even if the both oscillators oscillate in different timings relative to each other (shown in line (b) and line (d) of Fig. 7).

Since, in this embodiment, the reference pulse signal, having a predetermined pulse number (=1, in this embodiment), is transmitted instead of the continuous clock signal itself when performing the synchronizing operation between the signal-processing circuits, the problem of the electro-magnetic radiation can be solved. Accordingly, in the the signal-processing apparatus having a plurality of signal-processing circuits each of which provided with the clock-generating section, it becomes possible to perform the synchronizing operation between the clock-generating sections of the signal-processing circuits without causing the problem of the electro-magnetic radiation.

Incidentally, in the signal-processing apparatus embodied in the present invention, since the selecting operation, conducted in the digital delay clock adjusting means, is controlled corresponding to the skew, an expensive analogue delay element need not be employed for skew compensation, but even a low cost delay element can be employed for accurate skew compensation in a digital operating mode.

Concretely speaking, the signal-processing apparatus, embodied in the present invention, is so constituted that the delay-chain section, serving as a group of delay cells in which "n" number of delay cells are cascaded and each of the delay cells comprises a unit number of circuit elements, is provided, and the reference oscillation signal is inputted into the delay-chain section from the oscillator, and then, "n" number of delay signals, having delay times different relative to each other, are generated for the reference oscillation signal inputted corresponding to the number of times of passing through each of the delay cells. Further, the delay signal synchronized with the reference pulse signal, serving as a reference of the synchronized timing, is detected from a group of a plurality of delay signals generated in the above. Still further, based on the number of stages of the delay cells at which the detected delay signal is generated (herein, the number of stages indicates the number of the delay cells through which the reference oscillation signal passes) and the skew time, the number of stages of the delay cells, at which the delay signal canceling the skew is generated, is determined. Then, the delay signal, generated from the delay cell at the determined number of stages, is employed as the synchronized clock signal.

Further, according to the embodiment of the present invention, even if the electronic circuits, to be driven by the clock signals having the same phase, reside at remote positions relative to each other, it becomes possible to perform the synchronizing operation between the clock-generating sections of the signal-processing circuits without causing the problem of the electro-magnetic radiation, irrespective of distances between them.

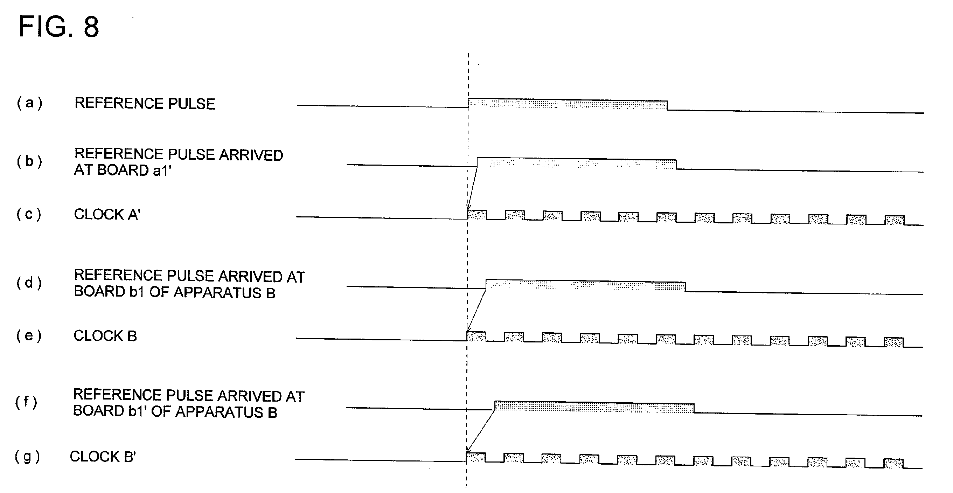

Incidentally, Fig. 8 shows a concrete example, in which the example shown in Fig. 7 is employed for more circuit boards and apparatus, and herein, circuit board a1', circuit board b1 of apparatus B and circuit board b1' of apparatus B are assumed. Although skews generated in the above circuit boards are different each other (as shown in line (b), line (d) and line (f) of Fig. 8), an employment of the digital delay clock adjusting means allows to generate clock signals in which skews are cancelled (as shown in line (c), line (e) and line (g) of Fig. 8).

(F) TIMING FOR PERFORMING SYNCHRONIZING OPERATION

The timing for performing the synchronizing operation in the signal-controlling apparatus, which is currently operated in the tandem operating mode as shown in Fig. 2, can be set at anyone of the following items (F-a) ∼ (F-e) or an arbitral combination of them.

(F-a) the time of turning ON the power of the apparatus
(F-b) the time before performing a job
(F-c) every predetermined time interval (excluding the time during performing a job)
(F-d) the time or every time interval set by the operator (excluding the time during performing a job)
(F-e) the time when the apparatus just enters into an idling status

Incidentally, it is desirable that item (F-a) is established as an indispensable one and items (F-b) ∼ (F-e) are arbitrarily combined. Further, it is also desirable that items (F-a) and (F-b) are established as an indispensable one and items (F-c) ∼ (F-e) are arbitrarily combined.

According to the above, even if the delay time of the delay element varies, it becomes possible to accurately conduct the synchronizing operation, including the synchronizing signal-detecting operation, calculation of the compensation amount, selection of pulses, etc., corresponding to the current status of the delay element. In this case, a desirable result with respect to each job can be obtained by conducting the synchronizing operation with the aforementioned synchronized point information S2 before executing the job concerned.

[OTHER EMBODIMENTS]

Although, in the embodiment described in the foregoing, the digital delay clock adjusting means is employed for obtaining the pulses in which the skew component is compensated for, another type analogue delay means (such as an analogue delay line) can be also employed for this purpose. It is desirable, however, that the digital delay clock adjusting means is employed for this purpose rather than the analogue delay means, because of the structural advantage of 1 chip IC circuit, shortened wirings in the 1 chip IC circuit, minimized influence of errors caused by heat and temperature change, controlling easiness, etc.

Although the embodiment, in which the reference pulse is one pulse, is exemplified in the foregoing, the number of reference pulse is not limited to one pulse. For instance, two or three pulses, which continuously appear within a predetermined time interval, can be also employed as the reference pulse. By employing such the reference pulse, it becomes possible to easily discriminate the reference pulse from noises. Further, even in this case, it becomes possible to perform the synchronizing operation without causing the problem of electro-magnetic radiation, when comparing to the case in which the innumerable number of pulses are communicated in the line as the clock pulse signals.

In the aforementioned embodiments, the whole configuration of the plurality of signal-processing circuits and the CPUs can be structured by the digital circuits, when each of the signal-processing circuits is structured by the digital delay clock adjusting means. In this configuration, it becomes possible to easily and accurately conduct the synchronizing operation in the clock-generating section of each signal-processing circuit in a digital operating mode. Further, by structuring the whole circuit in a digital circuit, it becomes possible to reduce the manufacturing cost lower than fractions of that when employing a conventional analogue delay line. Still further, by structuring the whole circuit in a 1 chip IC circuit, such as a gate array, etc., the interferences between signals, which have conventionally occurred in the externally coupled analogue delay line, are not generated, resulting in a solution of the signal noise problem.

As described in the foregoing, according to the present invention, the following effects can be attained.

**Claims**

1. A signal-controlling apparatus, comprising:

a plurality of signal-processing circuits, each of which includes a clock-generating section to generate a clock pulse signal;
a data communication line through which digital data are bilaterally communicated between said plurality of signal-processing circuits; and
a reference pulse communication line through which a reference pulse is transmitted from a master signal-processing circuit, being anyone of said plurality of signal-processing circuits, to a slave signal-processing circuit, being another one of said plurality of signal-processing circuits;

wherein, in said slave signal-processing circuit, said clock-generating section generates said clock pulse signal so as to adjust a phase of said clock pulse signal to that of said digital data, based on a phase of said reference pulse; and

wherein said reference pulse is periodically transmitted at a predetermined time interval.

2. The signal-controlling apparatus of claim 1, wherein said clock-generating section comprises:

a digital-delay clock adjusting section to adjust timings of rising-edges or falling-edges of said clock pulse signal generated by changing a selection for a plurality of delayed-clock pulses, which are generated by delaying clock-pulses, outputted from a reference oscillator, in slightly different delay times; and
a controlling section to control a selecting operation for said plurality of delayed clock pulses, performed in said digital-delay clock adjusting section, so as to adjust a phase of said clock pulse signal to that of said digital data, based on a phase of said reference pulse.

3. A signal-controlling apparatus, comprising:

a plurality of signal-processing circuits, each of which includes a clock-generating section to generate a clock pulse signal;
a data communication line through which digital data are bilaterally communicated between said plurality of signal-processing circuits; and
a reference pulse communication line through which a reference pulse is transmitted from a master signal-processing circuit, being anyone of said plurality of signal-processing circuits, to a slave signal-processing circuit, being another one of said plurality of signal-processing circuits;

wherein, in said slave signal-processing circuit, said clock-generating section generates said clock pulse signal so as to cancel a skew between said digital data and said clock pulse signal, corresponding to skew data stored in advance and based on a phase of said reference pulse; and

wherein said reference pulse is periodically transmitted at a predetermined time interval.

4. The signal-controlling apparatus of claim 3, wherein said clock-generating section comprises:

a digital-delay clock adjusting section to adjust timings of rising-edges or falling-edges of said clock pulse signal generated by changing a selection for a plurality of delayed-clock pulses, which are generated by delaying clock-pulses, outputted from a reference oscillator, in slightly different delay times; and
a controlling section to control a selecting operation for said plurality of delayed clock pulses, performed in said digital-delay clock adjusting section, so as to cancel a skew between said digital data and said clock pulse signal, corresponding to skew data stored in advance and based on a phase of said reference pulse.

5. The signal-controlling apparatus of claim 1 or 3, wherein said predetermined time interval is integral multiples of one period of said clock pulse signal to be generated by said clock-generating section.

6. The signal-controlling apparatus of claim 1 or 3, wherein said reference pulse consists of a plurality of unit pulses occurring at short time intervals.

7. The signal-controlling apparatus of claim 2 or 4, wherein each of said plurality of signal-processing circuits is composed of digital circuits.

8. An image-forming system, comprising: a plurality of image-forming apparatus, coupled each other so as to operate them in tandem or a tandem operating mode, and each of which has a signal-processing circuit including a clock-generating section to generate a clock pulse signal;
a data communication line through which digital data are bilaterally communicated between said plurality of image-forming apparatus; and
a reference pulse communication line through which a reference pulse is transmitted from a master signal-processing circuit of a master image-forming apparatus, being anyone of said plurality of image-forming apparatus, to a slave signal-processing circuit of a slave image-forming apparatus, being another one of said plurality of image-forming apparatus;

wherein, in said slave signal-processing circuit, said clock-generating section generates said clock pulse signal so as to adjust a phase of said clock pulse signal to that of said digital data, based on a phase of said reference pulse; and

wherein said reference pulse is periodically transmitted at a predetermined time interval.

9. The image-forming system of claim 8, wherein said predetermined time interval is integral multiples of one period of said clock pulse signal to be generated by said clock-generating section.

**10.** The image-forming system of claim 8, wherein said clock-generating section comprises:

a digital-delay clock adjusting section to adjust timings of rising-edges or falling-edges of said clock pulse signal generated by changing a selection for a plurality of delayed-clock pulses, which are generated by delaying clock-pulses, outputted from a reference oscillator, in slightly different delay times; and a controlling section to control a selecting operation for said plurality of delayed clock pulses, performed in said digital-delay clock adjusting section, so as to cancel a skew between said digital data and said clock pulse signal, corresponding to skew data stored in advance and based on a phase of said reference pulse.

**11.** The image-forming system of claim 8, wherein said reference pulse consists of a plurality of unit pulses occurring at short time intervals.

**12.** The image-forming system of claim 10, wherein each of said plurality of signal-processing circuits is composed of digital circuits.

# FIG. 1

# FIG. 2

EP 1 296 476 A2

# FIG. 3

# FIG. 4

(a) DL0

(b) DL1

(c) DL2

(d) DL3

(e) DL4

(f) DL5

(g) DL96

(h) DL97

(i) DL98

(j) DL99

(k) DL100

(l) DL101

(m) DL196

(n) DL197

(o) DL198

(p) DL199

(q) DL200

(r) DL201

# FIG. 5

(a)

(b) DL0

(c) DL1

(d) DL2

(e) DL3

(f) DL4

(g) DL5

(h) DL96

(i) DL97

(j) DL98

(k) DL99

(l) DL100

(m) DL101

PRD = 100

(n) DL196

(o) DL197

(p) DL198

(q) DL199

(r) DL200

(s) DL201

# FIG. 6

(a)    REFERENCE PULSE HAVING SKEW

(b) DL19

(c) DL20

(d) DL21

(e) DL22

(f) DL23

(g) DL24

COMPENSATION AMOUNT FOR SKEW

# FIG. 7

(a) REFERENCE PULSE

(b) OSC 1112

(c) CLOCK S6

(d) OSC 1122

CONDUCTING SYNCHRONIZING OPERATION

(e) CLOCK S6'

EP 1 296 476 A2

# FIG. 8

(a) REFERENCE PULSE

(b) REFERENCE PULSE ARRIVED
AT BOARD a1'

(c) CLOCK A'

(d) REFERENCE PULSE ARRIVED AT
BOARD b1 OF APPARATUS B

(e) CLOCK B

(f) REFERENCE PULSE ARRIVED AT
BOARD b1' OF APPARATUS B

(g) CLOCK B'

EP 1 296 476 A2